# EUROPÄISCHE PATENTSCHRIFT

(11) **EP 2 167 330 B1**
(45) Veröffentlichungstag und Bekanntmachung des Hinweises auf die Patenterteilung: **20.10.2010**
(21) Anmeldenummer: 08735869.3
(22) Anmeldetag: 07.04.2008
(51) Int. Cl.: B60C 11/13, B60C 11/04

(54) **FAHRZEUGLUFTREIFEN**
VEHICLE PNEUMATIC TIRE
PNEUMATIQUE DE VÉHICULE

(30) Priorität: 06.06.2007 DE 102007026813
(43) Veröffentlichungstag der Anmeldung: 31.03.2010
(73) Patentinhaber: Continental Reifen Deutschland GmbH, 30165 Hannover (DE)
(72) Erfinder: GAUS, Helmut, 31535 Neustadt (DE)
(86) Internationale Anmeldenummer: PCT/EP2008/054135
(87) Internationale Veröffentlichungsnummer: WO 2008/148594

(56) Entgegenhaltungen:
- EP-A- 0 069 464
- EP-A- 1 637 357
- EP-A- 1 698 491
- JP-A- 9 066 709
- US-A- 3 055 410
- US-A- 4 114 671

## Beschreibung

Die Erfindung betrifft einen Fahrzeugluftreifen, insbesondere für Nutzfahrzeuge, mit einer Anzahl von in Umfangsrichtung umlaufenden Umfangsnuten, welche an der Laufstreifenperipherie zumindest weitgehend parallel zueinander verlaufende und zumindest großteils geradlinig in Umfangsrichtung umlaufende Randkanten aufweisen, wobei am Nutgrund ein zumindest annähernd wellen- bzw. zickzackförmig verlaufender und gegenüber der Breite der Umfangsnut an der Laufstreifenperipherie schmaler Nutgrundpfad gebildet ist, dessen einspringenden Ecken Vorsprünge der Nutflanken zugeordnet sind.

Ein Fahrzeugluftreifen mit einem derartig ausgeführten Laufstreifen ist aus der US-A-4,114,671 bekannt. Um einen gleichmäßigen Abrieb sowie trotz zunehmendem Abrieb gute Griffeigenschaften sicherzustellen, wird bei diesem bekannten Reifen der Nutgrundpfad der Umfangsnuten derart ausgeführt, dass er in einer ausgeprägten Zickzackform verläuft. Die prismatisch ausgeführten Vorsprünge sind von dreieckigen Flächen begrenzt, die von der Laufstreifenperipherie bis zum Nutgrund reichen. In solchen Umfangsnuten können sich Fremdkörper, insbesondere Steine, sehr leicht einklemmen.

Eine Vielzahl von Patentanmeldungen und Patenten befasst sich damit, Umfangsnuten im Laufstreifen derart auszuführen, dass sich Fremdkörper, insbesondere kleine Steine, in den Nuten nicht verfangen können. So ist es beispielsweise aus der US-A-3,055,410 bekannt, in zickzackförmigen Umfangsnuten an den einspringenden Ecken Vorsprünge, die bis an den Nutgrund reichen, vorzusehen. Die bislang bekannten Lösungen konnten jedoch in der Praxis nicht überzeugen.

Der Erfindung liegt die Aufgabe zu Grunde, bei einem Fahrzeugluftreifen der eingangs genannten Art den Laufstreifen bzw. dessen Umfangsnuten derart auszuführen, dass Fremdkörper, insbesondere kleine Steine, verlässlich abgestoßen werden. Gleichzeitig sollen die Profilhaltbarkeit und die Geräuschentwicklung des Profils beim Abrollen günstig beeinflusst werden.

Gelöst wird die gestellte Aufgabe erfindungsgemäß dadurch, dass die Vorsprünge Teile oder Abschnitte von Körpern sind, die jeweils eine mit mindestens vier freien Seiten versehene Basisfläche aufweisen, die nahe der Laufstreifenperipherie und unter einem Winkel von mindestens 60° zur radialen Richtung geneigt verläuft und die von den freien Seiten in Richtung Nutgrund unter einem kleineren Winkel zur radialen Richtung geneigt verlaufende Begrenzungsflächen aufweist, wobei zwischen den in Umfangsrichtung benachbarten Vorsprüngen jeweils zwei in Richtung Nutgrundpfad verlaufende Flankenflächen vorgesehen sind, deren Neigungswinkel zur radialen Richtung größer ist als Winkel der Begrenzungsflächen und kleiner ist als der Winkel der Basisflächen.

Erfindungsgemäß ausgeführte Umfangsnuten sind daher durch eine große Anzahl von Flächen, die einerseits an den Vorsprüngen vorgesehen sind und andererseits zwischen den in Umfangsrichtung benachbarten Vorsprüngen verlaufen, charakterisiert. Diese Flächen stellen eindringenden Fremdkörpern, wie Steinen, eine Vielzahl unterschiedlich geneigter Abrollflächen zur Verfügung, sodass ein Hinausbefördern der Fremdkörper aus den Umfangsnuten optimal unterstützt wird. Durch die Vorsprünge wird gleichzeitig eine Versteifung der von den Umfangsnuten begrenzten Profilrippen bei axial gerichteten Kräften erzielt, was einer unerwünschten Verformung der Profilrippen entgegenwirkt und somit auch eine geringere Rissanfälligkeit in den Umfangsnuten zur Folge hat. Durch die Vorsprünge wird ferner der Querschnitt der Umfangsnuten über den Umfang ständig geändert, sodass kaum Rillenresonanzen entstehen können. Die Querschnittsreduzierung der Umfangsnuten durch die Vorsprünge bewirkt darüber hinaus einen Verzahnungseffekt in Traktionsrichtung, welcher insbesondere auf losen Untergründen von Vorteil ist.

Gemäß einer bevorzugten Ausführungsform der Erfindung verläuft die Basisfläche der Vorsprünge unter einem Winkel bis zu 85° zur radialen Richtung. Je größer dieser Winkel ist, umso besser ist die Versteifung der den Umfangsnuten benachbarten Profilrippen durch die Vorsprünge bei axial gerichteten Rippen durch die Vorsprünge bei axial gerichteten Kräften.

Der Verlauf der Begrenzungsflächen der Vorsprünge ist für ein optimales Hinausbefördern von eindringenden Fremdkörpern mitverantwortlich. Der Winkel, den die Begrenzungsflächen mit der radialen Richtung einschließen, sollte daher zwischen 2° und 45°, insbesondere bis zu 30°, betragen.

Für eine gleichmäßige Versteifung der Profilrippen, die an die Umfangsnuten anschließen, ist es ferner günstig, wenn die Basisflächen der Vorsprünge in der Form oder als Teil von regelmäßigen Vielecken ausgeführt sind.

Für eine optimale Querschnittsreduzierung der Umfangsnuten durch die Vorsprünge ist es ferner von Vorteil, wenn der Abstand des Ansatzes der Basisfläche an der Nutflanke zur Laufstreifenperipherie zwischen 10% und 20% der Profiltiefe beträgt.

Die mit erfindungsgemäß ausgeführten Umfangsnuten erzielbaren Effekte können dadurch verstärkt werden, dass die den Vorsprüngen gegenüberliegenden Randkanten durch V-förmige Einbuchtungen strukturiert werden, von welchen weitere Schrägflächen in Richtung Nutgrund verlaufen. Die gemeinsame Seite der Schrägflächen sollte mit der radialen Richtung einen Winkel einschließen, welcher zwischen 2° und 40° gewählt wird.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 eine Draufsicht auf einen Abschnitt einer Abwicklung einer Ausführungsform eines Laufstreifens eines Fahrzeugluftreifens,
Fig.2 einen Schnitt entlang der Linie A-A der Fig. 1,
Fig. 3 eine Draufsicht auf einen Ausschnitt einer Abwicklung einer weiteren Ausführungsvariante eines Laufstreifens und
Fig. 4 einen Schnitt entlang der Linie B-B der Fig. 3.

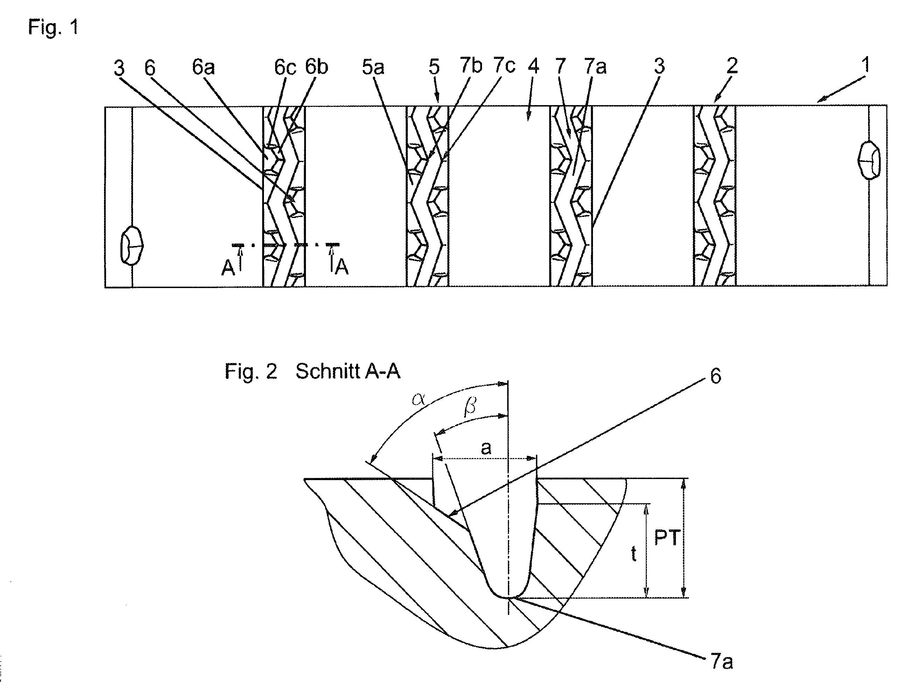

Die Erfindung befasst sich mit einer speziellen Ausgestaltung von Umfangsnuten in Laufstreifen, insbesondere in Laufstreifen von Nutzfahrzeugreifen. Fig. 1 zeigt eine Draufsicht auf einen Umfangsabschnitt eines Laufstreifens 1 mit vier voneinander gleich beabstandeten und in Umfangsrichtung verlaufenden Umfangsnuten 2, welche, im Neuzustand des Reifens betrachtet, jeweils zwei an der Laufstreifenperipherie geradlinig und parallel zueinander verlaufende Randkanten 3 aufweisen. Die Umfangsnuten 2 trennen bzw. begrenzen Umfangsrippen 4, die zwar unstrukturiert dargestellt sind, jedoch mit Quernuten, Einschnitten und dergleichen versehen sein können. Die maximale Tiefe der Umfangsnuten 2 entspricht der Profiltiefe PT (siehe Fig. 2), welche zwischen 8 mm und 30 mm gewählt wird. Die Breite a der Umfangsnuten 2 entspricht dem gegenseitigen Abstand der Randkanten 3 und wird zwischen 7 mm und 23 mm gewählt. Die Umfangsnuten 2 weisen zwei einander gegenüberliegende Nutflanken 5 auf, die im Wesentlichen durch Flankenflächen 5a und Vorsprünge 6 strukturiert sind. Die Flankenflächen 5a und die Vorsprünge 6 verlaufen bis zum Nutgrund und begrenzen hier einen zickzackförmig verlaufenden, vergleichsweise schmalen, zwischen 20 % und 30 % der Nutbreite a breiten Nutgrundpfad 7, welcher aus gleichlangen Abschnitten 7a besteht, welche derart ausgeführt sind, dass die Wiederholungslänge bzw. Wellenlänge der Zickzackform mindestens 10 mm und höchstens 100 mm beträgt. In den, bezogen auf die Randkanten 3, einspringenden Ecken 7b des Nutgrundpfades 7 sind die Vorsprünge 6 positioniert.

Wie Fig. 1 in Verbindung mit Fig. 2 zeigt, bildet jeder Vorsprung 6 einen Körper, welcher durch eine Basisfläche 6a und Paare von Begrenzungsflächen 6b sowie 6c gebildet ist. Die Basisfläche 6a ist bei dieser Ausführungsvariante annähernd die Hälfte eines regelmäßigen Sechseckes, welches mittig durch zwei gegenüberliegende Seiten halbiert ist. Die durch die Halbierung gebildete Begrenzungsseite der Basisfläche 6a verläuft parallel zur Randkante 3 in einem Abstand t vom Nutgrund, welcher 10 % bis 20 % der Profiltiefe PT beträgt. Bevorzugt beträgt der Abstand dieser Seite der Basisfläche 6a von der Laufstreifenperipherie zwischen 1,5 mm und 3 mm. Die Basisfläche 6a ist unter einem Winkel α, welcher zwischen 60° und 85° beträgt, zur radialen Richtung geneigt. Den einspringenden Ecken 7b des Nutgrundpfades 7 sind die gemeinsamen Seiten der Begrenzungsflächen 6b zugeordnet, welche unter einem Winkel β, welcher zwischen 2° und 45° beträgt und damit kleiner als der Winkel α ist, zur radialen Richtung geneigt sind. Von den der Randkante 3 benachbarten Seiten der Basisfläche 6a verlaufen die Begrenzungsflächen 6c, ebenfalls unter dem Winkel β zur radialen Richtung geneigt, in Richtung Nutgrund. Der Übergang zwischen den Flächen 6c und 5a wird vorzugsweise, wie dargestellt, verrundet. Die Flächen 6c sind Übergangsflächen zu den geneigten Flankenflächen 5a und daher dreieckig. Die Flankenflächen 5a verlaufen zwischen den Vorsprüngen 6 von den Randkanten 3 zum Nutgrundpfad 7 unter einem Winkel zur radialen Richtung, welcher größer ist als der Winkel β, jedoch kleiner ist als der Winkel α. Fig. 2 zeigt die gemeinsame Seite der Flankenflächen 5a an den vorspringenden Ecken 7c des Nutgrundpfades 7.

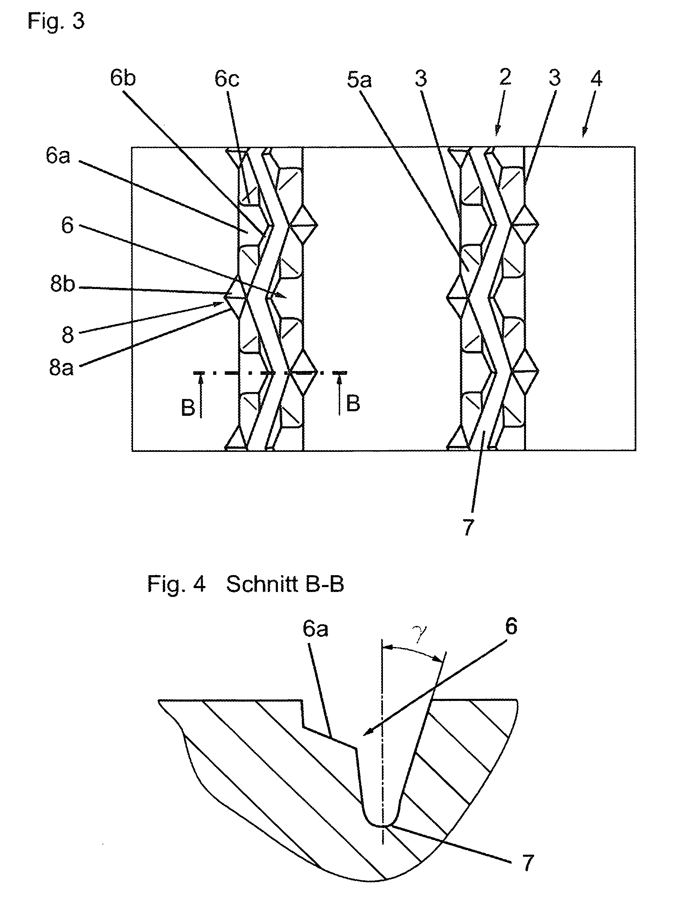

Bei der in Fig. 3 und Fig. 4 gezeigten Ausführungsvariante entsprechen die Ausführung und Anordnung der Umfangsnuten 2 mit Randkanten 3, Vorsprüngen 6, Flankenflächen 5a und einem zickzackförmigen Nutgrundpfad 7 der Ausführung und Anordnung gemäß der ersten Ausführungsform. Die Vorsprünge 6 sind analog zu Fig. 1 mit Basisflächen 6a und Begrenzungsflächen 6b und 6c versehen. Zusätzlich sind an jenen Abschnitten der Randkanten 3, die den Vorsprüngen 6 gegenüber liegen, V-förmig in die jeweilige Umfangsrippe 3 hineinragende Einbuchtungen 8 ausgebildet. Von den an der Laufstreifenperipherie V-förmig verlaufenden Rändern 8a der Einbuchtungen 8 verlaufen dreieckige Schrägflächen 8b spitz zusammenlaufend zu einem vorspringenden Eck 7c des Nutgrundpfades 7. Die gemeinsame Seite der Schrägflächen 8b schließt mit der radialen Richtung einen Winkel γ ein, welcher zwischen 2° und 40° gewählt wird. Die Schrägflächen 8b können auch in einem geringen Abstand vom Nutgrundpfad 7 enden und derart entlang des Nutgrundpfades 7 eine Art Nutgrundnut mitbilden.

Durch die erfindungsgemäße Ausführung der Umfangsnuten 2 mit einer Vielzahl von unter unterschiedlichen Winkeln zur radialen Richtung verlaufenden Flächen, die großteils auch relativ große Öffnungswinkel zur Verfügung stellen, werden Abrollflächen für eindringende Fremdkörper, wie kleine Steine, gebildet, die diese Fremdkörper aus den Umfangsnuten 2 hinaus befördern. Der am Nutgrund gebildete zickzackförmig verlaufende Nutgrundpfad 7 kann an seinen Ecken auch verrundert ausgeführt werden, was für die Dauerhaltbarkeit des Profils von Vorteil ist. Die Anordnung der Vorsprünge 6 bedingt lokale Querschnittsverminderungen der Umfangsnuten 2 in Traktionsrichtung. Die Begrenzungsflächen der Vorsprünge bilden Kanten an den Vorsprüngen, die die Quersteifigkeit des Laufstreifens günstig beeinflussen. Der Querschnitt der Umfangsnuten ändert sich ferner fortwährend in Umfangsrichtung, sodass keine Rillenresonanzen entstehen können und somit das Abrollgeräusch vorteilhaft beeinflusst wird.

### Bezugszeichenliste

- 2.........: 1 .........Laufstreifen Umfangsnut
- 3.........: Randkanten
- 4.........: Umfangsrippen
- 5 .........: Nutflanken
- 5a .......: Flankenflächen
- 6.........: Vorsprünge
- 6a .......: Basisfläche
- 6b.......: Begrenzungsflächen, rechteckig
- 6c .......: Übergangsflächen, dreieckig
- 7.........: Nutgrundpfad
- 7a .......: Abschnitte
- 7b .......: einspringende Ecken
- 7c .......: vorspringende Ecken
- 8.........: Einbuchtung 8a ....... Rand
- 8b.......: Schrägfläche
- a .........: Breite der U-Nut
- PT ......: Profiltiefe
- α.........: Winkel der Basisfläche 8a
- β.........: Winkel der Flächen 6b
- γ .........: Winkel der Flächen 8b

## Patentansprüche

1. Fahrzeugluftreifen, insbesondere für Nutzfahrzeuge, mit einer Anzahl von in Umfangsrichtung umlaufenden Umfangsnuten (2), welche an der Laufstreifenperipherie zumindest weitgehend parallel zueinander verlaufende und zumindest großteils geradlinig in Umfangsrichtung umlaufende Randkanten (3) aufweisen, wobei am Nutgrund ein zumindest annähernd wellen- bzw. zickzackförmig verlaufender und gegenüber der Breite der Umfangsnut (2) an der Laufstreifenperipherie schmaler Nutgrundpfad (7) gebildet ist, dessen einspringenden Ecken (7b) Vorsprünge (6) der Nutflanken (5) zugeordnet sind.
**dadurch gekennzeichnet,**
**dass** die Vorsprünge (6) Teile oder Abschnitte von Körpern sind, die jeweils eine mit mindestens vier freien Seiten versehene Basisfläche (6a) aufweisen, die nahe der Laufstreifenperipherie und unter einem Winkel (α) von mindestens 60° zur radialen Richtung geneigt verläuft und die von den freien Seiten in Richtung Nutgrund unter einem kleineren Winkel (β) zur radialen Richtung geneigt verlaufende Begrenzungsflächen (6b, 6c) aufweist, wobei zwischen den in Umfangsrichtung benachbarten Vorsprüngen (6) jeweils zwei in Richtung Nutgrundpfad (7) verlaufende Flankenflächen (5a) vorgesehen sind, deren Neigungswinkel zur radialen Richtung größer ist als der Winkel (β) der Begrenzungsflächen (6b, 6c) und kleiner ist als der Winkel (α) der Basisflächen (6a).

2. Fahrzeugluftreifen nach Anspruch 1, **dadurch gekennzeichnet, dass** der Winkel (α) der Basisfläche (6a) der Vorsprünge (6) zur radialen Richtung bis zu 85° beträgt.

3. Fahrzeugluftreifen nach Anspruch 1, **dadurch gekennzeichnet, dass** der Winkel (β) der Begrenzungsflächen (6b, 6c) der Vorsprünge (6) zur radialen Richtung zwischen 2° und 45°, insbesondere bis zu 30°, beträgt.

4. Fahrzeugluftreifen nach Anspruch 1, **dadurch gekennzeichnet, dass** die Basisfläche (6a) in der Form oder als Teil eines regelmäßigen Vieleckes ausgeführt ist.

5. Fahrzeugluftreifen nach einem der Ansprüche 1 bis 4, **dadurch gekennzeichnet, dass** der Abstand des Ansatzes der Basisfläche (6a) an der Nutflanke (5) zur Laufstreifenperipherie zwischen 10 % und 20 % der Profiltiefe (PT) beträgt.

6. Fahrzeugluftreifen nach einem der Ansprüche 1 bis 5, **dadurch gekennzeichnet, dass** die den Vorsprüngen (6) gegenüberliegenden Randkanten (3) durch V-förmige Einbuchtungen (8) strukturiert sind, von welchen Schrägflächen (8b) in Richtung Nutgrund verlaufen.

7. Fahrzeugluftreifen nach Anspruch 6, **dadurch gekennzeichnet, dass** die gemeinsame Seite der Schrägflächen (8) mit der radialen Richtung einen Winkel (γ) einschließen, welcher zwischen 2° und 40° beträgt.

## Claims

1. Vehicle pneumatic tire, in particular for utility vehicles, having a plurality of circumferential grooves (2) which run in the circumferential direction and have, on the tread periphery, outer edges (3) which run at least largely parallel with one another and run around at least substantially linearly in the circumferential direction, wherein at the groove base a groove base path (7) is formed, which runs at least approximately in a wave shape or zigzag shape and is narrow compared to the width of the circumferential groove (2) on the tread periphery and to whose inward pointing corners (7b) projections (6) of the groove sides (5) are assigned,
**characterized**
**in that** the projections (6) are parts or sections of bodies which each have a base surface (6a) which is provided with at least four free sides, runs inclined at an angle (α) of at least 60° with respect to the radial direction near to the tread periphery and has boundary faces (6b, 6c) which run inclined at a smaller angle (β) with respect to the radial direction from the free sides in the direction of the groove base, wherein in each case two side surfaces (5a) running in the direction of the groove base path (7) are provided between the projections (6) which are adjacent in the circumferential direction, and the angle of inclination of said surfaces (5a) with respect to the radial direction is greater than the angle (β) of the boundary surfaces (6b, 6c) and smaller than the angle (α) of the base surfaces (6a).

2. Vehicle pneumatic tire according to Claim 1, **characterized in that** the angle (α) of the base surface (6a) of the projections (6) is up to 85° with respect to the radial direction.

3. Vehicle pneumatic tire according to Claim 1, **characterized in that** the angle (β) of the boundary surfaces (6b, 6c) of the projections (6) with respect to the radial direction is between 2° and 45°, in particular up to 30°.

4. Vehicle pneumatic tire according to Claim 1, **characterized in that** the base surface (6a) is embodied in the form of a regular polygon or as a part thereof.

5. Vehicle pneumatic tire according to one of Claims 1 to 4, **characterized in that** the distance between the point where the base surface (6a) is attached to the groove side (5) and the tread periphery is between 10% and 20% of the profile depth (PD).

6. Vehicle pneumatic tire according to one of Claims 1 to 5, **characterized in that** the outer edges (3) lying opposite the projections (6) are structured by means of V-shaped indents (8), from which oblique surfaces (8b) run in the direction of the groove base.

7. Vehicle pneumatic tire according to Claim 6, **characterized in that** the common side of the oblique surfaces (8) encloses, with the radial direction, an angle (γ) which is between 2° and 40°.

## Revendications

1. Bandage pneumatique pour roue de véhicule, en particulier pour véhicules utilitaires, dont la périphérie est entourée par plusieurs rainures périphériques (2) qui présentent à la périphérie de la bande de roulement des arêtes de bordure (3) qui s'étendent au moins largement en parallèle les unes aux autres et pour leur plus grande partie en ligne droite dans la direction périphérique et au moins un chemin (7) de fond de rainure qui s'étend dans le fond de la rainure au moins sensiblement en ondulations ou en zigzag, plus étroit que la largeur de la rainure périphérique (2) à la périphérie de la bande de roulement et dont les sommets (7b) des retraits sont associés à des saillies (6) des flancs (5) de la rainure,
**caractérisé en ce que**
les saillies (6) sont des parties ou segments de corps qui présentent tous une surface de base (6a) dotée d'au moins quatre côtés libres, qui s'étendent à proximité de la périphérie de la bande de roulement sous une inclinaison d'un angle (α) d'au moins 60° par rapport à la direction radiale et qui présentent des surfaces frontières (6b, 6c) qui s'étendent obliquement par rapport au côté libre dans la direction du fond de la rainure sous un angle (β) plus petit par rapport à la direction radiale les deux surfaces de flanc (5a) dont l'angle d'inclinaison par rapport à la direction radiale est supérieur à l'angle (β) des surfaces frontières (6b, 6c) et plus petit que l'angle (α) des surfaces de base (6a) et qui s'étendent en direction du parcours (7) du fond de la rainure sont prévues entre les saillies (6) voisines dans la direction périphérique.

2. Bandage pneumatique pour roue de véhicule selon la revendication 1, **caractérisé en ce que** l'angle (α) de la surface de base (6a) des saillies (6) par rapport à la direction radiale peut atteindre 85°.

3. Bandage pneumatique pour roue de véhicule selon la revendication 1, **caractérisé en ce que** l'angle (β) des surfaces frontières (6b, 6c) des saillies (6) par rapport à la direction radiale est compris entre 2° et 45° et en particulier peut atteindre 30°.

4. Bandage pneumatique pour roue de véhicule selon la revendication 1, **caractérisé en ce que** la surface de base (6a) présente la forme d'un polygone régulier ou d'une partie de polygone régulier.

5. Bandage pneumatique pour roue de véhicule selon l'une des revendications 1 à 4, **caractérisé en ce que** sur le flanc (5) de la rainure, la distance entre l'appui de la surface de base (6a) et la périphérie de la bande de roulement représente entre 10 % et 20 % de la profondeur (PT) du profilé.

6. Bandage pneumatique pour roue de véhicule selon l'une des revendications 1 à 5, **caractérisé en ce que** les arêtes de bordure (3) opposées aux saillies (6) sont structurées par des entailles (8) en forme de V dont les surfaces obliques (8b) sont orientées en direction du fond de la rainure.

7. Bandage pneumatique pour roue de véhicule selon la revendication 6, **caractérisé en ce que** le côté commun des surfaces obliques (8) forme avec la direction radiale un angle (γ) compris entre 2° et 40°.
